(19) Europäisches Patentamt
European Patent Office
Office européen des brevets

(11) EP 4 546 242 A1

(12) EUROPEAN PATENT APPLICATION

(43) Date of publication:
30.04.2025 Bulletin 2025/18

(21) Application number: 24202779.5

(22) Date of filing: 26.09.2024

(51) International Patent Classification (IPC):
G06Q 30/0251 (2023.01)    G06Q 30/0204 (2023.01)

(52) Cooperative Patent Classification (CPC):
G06Q 30/0271; G06Q 30/0204

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.10.2023 JP 2023183445

(71) Applicant: FUJITSU LIMITED
Kawasaki-shi, Kanagawa 211-8588 (JP)

(72) Inventors:
• Mitomi, Tatsuya
Kawasaki-shi, Kanagawa, 211-8588 (JP)
• Segawa, Eigo
Kawasaki-shi, Kanagawa, 211-8588 (JP)

(74) Representative: Hoffmann Eitle
Patent- und Rechtsanwälte PartmbB
Arabellastraße 30
81925 München (DE)

(54) COMPUTER PROGRAM, MODEL GENERATION METHOD, AND INFORMATION PROCESSING APPARATUS

(57) A computer obtains first feature data indicating a plurality of first feature values corresponding to a plurality of options and history data associating the value of an attribute of a person with a choice result of the person. The computer generates, for each of a plurality of classes with different standard options specified from a plurality of options, second feature data indicating a plurality of second feature values obtained by converting the first feature values using the first feature value of the standard option. The computer generates a prediction model including a plurality of first models that are respectively for the classes and that each calculate a prediction result of predicting choice behavior and a second model that calculates a result of classification into the classes on the basis of a value of the attribute, using the history data and the second feature value data generated for each class.

FIG. 1

**Description**

FIELD

The embodiments discussed herein relate to a computer program, a model generation method, and an information processing apparatus.

BACKGROUND

There are cases where a computer generates a model that predicts choice behavior of people using data collected from the real world. The generated model may be a discrete choice model that predicts choice behavior of choosing one option from a plurality of options. The prediction result may indicate a choice probability for each of the plurality of options.

The choice behavior is influenced by feature values respectively given to the plurality of options. For example, the choice behavior of choosing a transportation mode from a plurality of transportation modes is influenced by the fares of the plurality of transportation modes. The computer may perform human behavior simulation to simulate choice behavior of people under a specific situation, using a generated model. For example, it is considered that, with respect to the plurality of transportation modes, the computer predicts the number of users who will use each transportation mode, with their fares specified.

In this connection, there is proposed a behavioral characteristic prediction system that calculates a feature that is likely to influence cancellation of a communication service on the basis of a communication log of a base station, and trains a model that predicts user cancellation using the calculated feature as an explanatory variable. Further, there is proposed a model estimation method of generating a model indicating the behavior of people who access advertisement information on products and subsequently choose and purchase products, i.e., a model that calculates a choice probability for each of the plurality of products.

Still further, there is proposed an action selection learning device that updates a weight on each factor such as transportation cost and travel time for a person each time the person selects a transportation mode, and using the updated weights, presents an option with which the person will have a higher satisfaction level at the next travel time. Still further, there is proposed a recommendation system that trains a prediction model that estimates a known probability that the presence of a shop is known and a selection probability that people who know the shop will select the shop, on the basis of action logs of various people and recommends a shop with a low known probability and a high selection probability.

Still further, there is proposed an information processing system that generates a prediction model that converts a behavior log of a person into a first feature and vital data of the person into a second feature and predicts the treatment effect of each lifestyle improvement plan using the two types of features.

International Publication Pamphlet No. WO 2016/017086
Japanese Laid-open Patent Publication No. 2017-16273
International Publication Pamphlet No. WO 2018/198323
Japanese Laid-open Patent Publication No. 2021-22243
Japanese Laid-open Patent Publication No. 2022-122584

Choice behavior of a person may be influenced by not only objective feature values given to options but also a subjective reference feature value of the person in the options. The reference feature value here is sometimes called a reference point. For example, prospect theory in behavioral economics presents loss aversion, which indicates that disadvantageous losses relative to the reference point influence subjective values more than advantageous gains relative to the reference point. Therefore, it is conceivable to cause the computer to generate a model that takes the reference feature value into account.

Note that people have different reference feature values, and such reference feature values may be a latent variable that is not observable directly from outside. For this reason, it is not easy to directly generate a model that includes such reference feature values as an explanatory variable.

SUMMARY

An objective of the present disclosure is to improve the accuracy of a model that predicts choice behavior of people.

According to one aspect, there is provided a computer program that causes a computer to perform a process including: obtaining first feature data and history data, the first feature data indicating a plurality of first feature values corresponding to a plurality of options, the history data associating a value of an attribute of a person with a choice result of the person in choosing from the plurality of options; generating, for each of a plurality of classes with different standard options specified from the plurality of options, second feature data indicating a plurality of second feature values obtained by converting the plurality of first feature values using a first feature value corresponding to a standard option of the class; and generating a prediction model including a plurality of first models corresponding to the plurality of classes and a second model, using the history data and the second feature data generated for each class, the plurality of first models each being configured to calculate a prediction result of predicting choice behavior among the plurality of options, the second model being configured to calculate a classification result of classification into the plurality of classes based on a value of the attribute.

BRIEF DESCRIPTION OF DRAWINGS

FIG. 1 is a view for describing an information processing apparatus according to a first embodiment;
FIG. 2 illustrates an example of the hardware configuration of an information processing apparatus according to a second embodiment;
FIG. 3 illustrates an example of a first discrete choice model;
FIG. 4 illustrates an example of a second discrete choice model;
FIG. 5 illustrates an example of calculating choice probabilities using a plurality of classes with different reference points;
FIG. 6 illustrates an example of a prediction model that includes discrete choice models for a plurality of classes;
FIG. 7 illustrates an example of input and output data of a discrete choice model;
FIG. 8 illustrates an example of a class estimation model;
FIG. 9 is a block diagram illustrating an example of the functions of the information processing apparatus;
FIG. 10 illustrates an example of a behavior history table;
FIG. 11 is a flowchart illustrating an example of a procedure for model generation; and
FIG. 12 is a flowchart illustrating an example of a procedure for behavior prediction.

DESCRIPTION OF EMBODIMENTS

Hereinafter, embodiments will be described with reference to the accompanying drawings.

First Embodiment

A first embodiment will now be described.

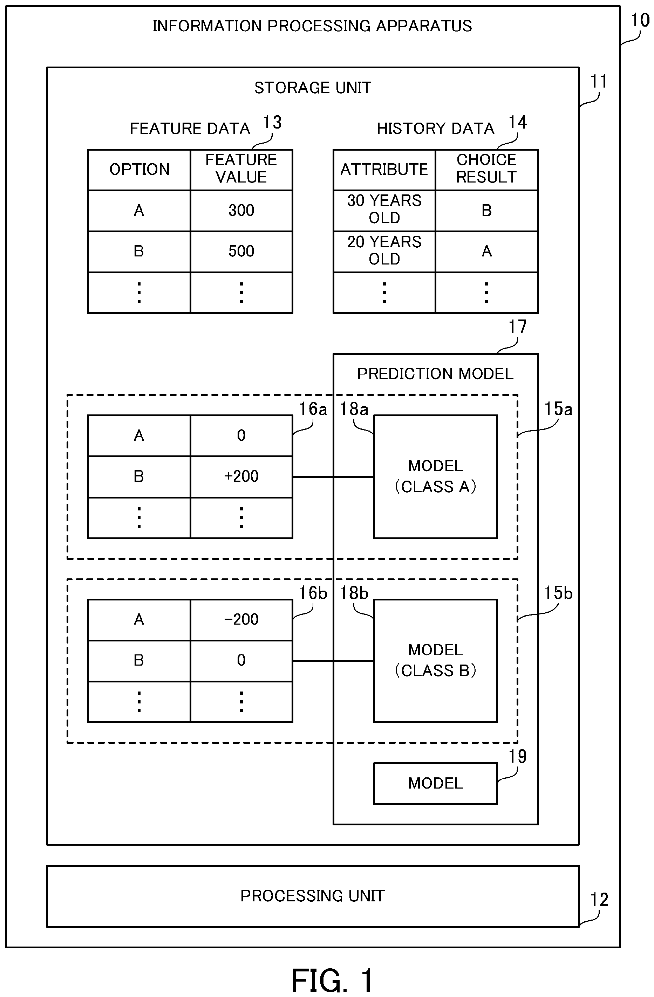

FIG. 1 is a view for describing an information processing apparatus according to the first embodiment.
The information processing apparatus 10 of the first embodiment is designed to generate a prediction model 17 that predicts choice behavior of people among a plurality of options. Generating the prediction model 17 may be called machine learning. The information processing apparatus 10 or another information processing apparatus may predict choice behavior using the generated prediction model 17. The information processing apparatus 10 may be a client apparatus or a server apparatus. The information processing apparatus 10 may be called a computer, a model generation apparatus, a machine learning apparatus, a behavior prediction apparatus, or a simulation apparatus.
The information processing apparatus 10 includes a storage unit 11 and a processing unit 12. The storage unit 11 may be a volatile semiconductor memory, such as a random access memory (RAM). Alternatively, the storage unit 11 may be a non-volatile storage device, such as a hard disk drive (HDD) or a flash memory.
For example, the processing unit 12 is a processor such as a central processing unit (CPU), a graphics processing unit (GPU), or a digital signal processor (DSP). Note that the processing unit 12 may include an application specific integrated circuit (ASIC), a field programmable gate array (FPGA), or another electronic circuit. For example, the processor runs programs stored in a memory such as a RAM (which may be the storage unit 11). The processor may be called processor circuitry. A set of processors may be called a multiprocessor or simply a "processor." Among a plurality of processing steps, different processing steps may be executed by different processors.
The storage unit 11 stores feature data 13 and history data 14. The information processing apparatus 100 may accept the feature data 13 and history data 14 input by a user or may receive the feature data 13 and history data 14 from another information processing apparatus.
The feature data 13 indicates first feature values respectively corresponding to a plurality of options. Normally, each person chooses one option from the plurality of options. In the case where the choice behavior is repetitive, each person may choose different options at different times (for example, on different dates). Examples of the options may be transportation modes such as bus and train. Other examples of the options may be ways to use the transportation modes such as getting-in places and getting-off places.

The first feature values are normally numeric, and typically non-negative integers. The first feature value corresponding to an option may be determined on the basis of a property of the option, or may be artificially set for the option. A higher first feature value may indicate a more advantageous gain for people, or may indicate a more disadvantageous cost for people. Examples of the first feature values are the fares or travel times of transportation modes.

The history data 14 associates the value of an attribute of a person with a choice result of the person in choosing from the plurality of options. The history data 14 may include a plurality of records indicating choice results of different people or a plurality of records indicating choice results of the same person at different times. For example, the history data 14 is collected from the real world, and may include data collected from sensor devices such as automatic ticket gates or smartphones.

The attribute is an information item representing a characteristic of people. The attribute is preferably an item that is related to choice behavior. For example, values of the attribute are numeric, or codes or character strings that are convertible into numerical values. Examples of the attribute include age and gender. For example, a value of the attribute is specified by comparing an identifier read by a sensor device against registration information registered in advance. A choice result indicates one chosen option, for example.

As an example, the feature data 13 indicates a first feature value of 300 for an option A and a first feature value of 500 for an option B. The history data 14 indicates that a person at the age of 30 chose the option B and a person at the age of 20 chose the option A.

The processing unit 12 generates the prediction model 17 using the feature data 13 and history data 14. For example, the generation of the prediction model 17 corresponds to the machine learning of adjusting the values of parameters included in the prediction model 17. The prediction model 17 predicts choice behavior of each person among the plurality of options. The prediction result may indicate one option that is most likely to be chosen or the probabilities of choosing each of the plurality of options.

In order to improve the prediction accuracy of the prediction model 17, it is conceivable that the processing unit 12 reflects human cognitive biases, such as loss aversion, in the prediction model 17. For example, under the prospect theory, the prediction model 17 may be designed to evaluate options whose first feature values are higher than a reference feature value and options whose first feature values are lower than the reference feature value with different evaluation rules. The reference feature value is sometimes called a reference point. However, the reference feature value is different for each person and is normally not observable directly from outside. In view of this, the processing unit 12 generates the prediction model 17 in the following manner.

First, the processing unit 12 defines a plurality of classes, each with a different standard option. The standard option is specified from the plurality of options indicated in the feature data 13. Each class may be interpreted as corresponding to a group of people who consider the standard option to be most rational among the plurality of options, or a group of people who most frequently choose the standard option. The processing unit 12 may define classes corresponding to all options or classes corresponding to only some of the options. As an example, the processing unit 12 defines a class 15a that has the option A as the standard option and a class 15b that has the option B as the standard option.

For each of the plurality of classes, the processing unit 12 generates feature data by converting the feature data 13. The converted feature data includes a plurality of second feature values corresponding to the plurality of options. At this time, the processing unit 12 converts the first feature values to the second feature values using the first feature value corresponding to the standard option as the reference feature value.

The second feature values may be relative values with respect to the reference feature value. The second feature value corresponding to the standard option may be taken as 0. For example, the processing unit 12 calculates a second feature value by subtracting the reference feature value from a first feature value. A higher second feature value may indicate a more advantageous gain for people, or may indicate a more disadvantageous cost for people. In the case where the first feature values represent costs and the second feature values represent gains, the processing unit 12 may invert the signs of the values.

As an example, the processing unit 12 generates feature data 16a corresponding to the class 15a and feature data 16b corresponding to the class 15b. The second feature values included in the feature data 16a are calculated respectively by subtracting the first feature value of "300" of the option A used as the reference feature value from the first feature values of the plurality of options. The second feature values included in the feature data 16b are calculated respectively by subtracting the first feature value of "500" of the option B used as the reference feature value from the first feature values of the plurality of options.

The processing unit 12 generates the prediction model 17 using the history data 14 and the converted feature data generated for each of the plurality of classes. The prediction model 17 includes a plurality of first model corresponding to the plurality of classes and a model 19 that is a second model. As an example, the prediction model 17 includes a model 18a corresponding to the class 15a that has the option A as the standard option and a model 18b corresponding to the class 15b that has the option B as the standard option.

Each first model calculates a prediction result of predicting choice behavior among the plurality of options. The prediction result of the first model may indicate one option that is most likely to be chosen or may include the respective choice probabilities of the plurality of options. The first model of a certain class relatively evaluates the plurality of options with respect to the standard option of the class. The first model may be referred to as a discrete choice model and may be based on the prospect theory.

Each first model may include a function with a variable for the second feature values. This function may be referred to as a utility function or a value function. The utility function calculates, from the second feature value of an option, an evaluation value indicating the utility that a person obtains from the option. The value function calculates, from the second feature value of an option, an evaluation value indicating the value of the option for a person. The function may further include a variable representing a personal attribute or a variable representing an environmental condition such as the weather at the time of choice.

The slope of the function may be asymmetric between the domain where the value of the variable is greater than the second feature value (for example, 0) of the standard option and the domain where the value of the variable is less than the second feature value of the standard option. Typically, the slope of the function is steeper in the domain where the value of the variable is disadvantageous relative to the standard option than in the domain where the value of the variable is advantageous relative to the standard option. This function may be a nonlinear function that includes one or more variables and one or more parameters.

Each first model may convert the plurality of evaluation values corresponding to the plurality of options into a prediction result. For example, the first model may use a softmax function to convert the plurality of evaluation values calculated by the above-described function into a plurality of choice probabilities.

In generating the prediction model 17, the processing unit 12 trains the first model of a certain class using the converted feature data generated for the class. As an example, the processing unit 12 inputs each second feature value included in the feature data 16a into the model 18a to calculate a prediction result for the class 15a. Similarly, the processing unit 12 inputs each second feature value included in the feature data 16b into the model 18b to calculate a prediction result for the class 15b. Then, the processing unit 12 may adjust the values of the parameters included in each of the plurality of first models using the prediction results of the plurality of classes and the choice results included in the history data 14.

The model 19, which is the second model, calculates a result of classification into the plurality of classes, from the value of the attribute of a person. The classification result may indicate one class to which the person is most likely to belong or may include a plurality of class probabilities corresponding to the plurality of classes. The model 19 may be a neural network that calculates a classification result from a value of the attribute.

The prediction model 17 determines how to use the prediction results of the plurality of classes on the basis of the classification result calculated by the model 19. For example, the prediction model 17 outputs the prediction result of one class with the highest class probability among the prediction results of the plurality of classes. Alternatively, for example, the prediction model 17 combines the prediction results of the plurality of classes using the class probabilities and outputs the combined prediction result. For example, the combined prediction result is a weighted average of the plurality of prediction results.

In generating the prediction model 17, the processing unit 12 trains the model 19 using the history data 14. The processing unit 12 may train the model 19 together with the first models. For example, the processing unit 12 inputs a value of the attribute included in the history data 14 into the model 19 to calculate a classification result. The processing unit 12 then adjusts the values of the parameters included in the model 19 using the prediction results of the plurality of classes, the classification result, and the choice result included in the history data 14. The processing unit 12 may adjust the values of the parameters by comparing a prediction result selected based on the classification result or a combined prediction result generated based on the classification result with the correct choice result.

As described above, the information processing apparatus 10 of the first embodiment obtains the feature data 13 and history data 14. The feature data 13 indicates a plurality of first feature values corresponding to a plurality of options. The history data 14 associates the value of an attribute of a person with a choice result of the person. The information processing apparatus 10 generates the feature data 16a and 16b, respectively, for the classes 15a and 15b with different standard options specified from the plurality of options. Each feature data 16a and 16b indicates a plurality of second feature values obtained by converting the plurality of first feature values using the first feature value corresponding to the standard option.

The information processing apparatus 10 generates the prediction model 17 including the models 18a and 18b corresponding to the classes 15a and 15b and the model 19, using the history data 14 and feature data 16a and 16b. Each model 18a and 18b calculates a prediction result of predicting choice behavior. The model 19 calculates a result of classification into the classes 15a and 15b, from a value of the attribute.

As a result, with the use of the generated prediction model 17, the information processing apparatus 10 or another information processing apparatus is able to perform human behavior simulation to predict choice behavior of people. In addition, the information processing apparatus 10 or the other information processing apparatus is able to predict a change in the choice behavior of people in the case where the feature values of options are changed. Therefore, in consideration about measures of changing the feature values of options, the prediction model 17 is able to provide useful information.

In addition, the prediction model 17 is able to calculate prediction results taking into account the reference feature value of each person that is difficult to directly observe. Therefore, as compared with models that do not take such reference feature values into account and models that regard the reference feature values of all people as being identical, the prediction model 17 has improved prediction accuracy.

In this connection, the prediction model 17 may combine the prediction results obtained by the models 18a and 18b using the class probabilities included in a classification result of the model 19. This improves the prediction accuracy for people whose reference feature values are not completely identical to the feature value of any option. In addition, the information processing apparatus 10 may determine the values of the parameters included in the models 18a and 18b and the values of the parameters included in the model 19 using the history data 14. This enables the prediction model 17 to output a final prediction result with improved accuracy.

In addition, the information processing apparatus 10 may update the values of the parameters included in the models 18a and 18b on the basis of the prediction results calculated from the feature data 16a and 16b and the choice results included in the history data 14. Thereby, the models 18a and 18b are trained so as to evaluate each option on the basis of the relative values with respect to the reference feature value. In addition, the model 19 may be a neural network. As a result, the model 19 has improved classification accuracy, and the information processing apparatus 10 is able to train the model 19 efficiently.

Second Embodiment

A second embodiment will now be described.

The information processing apparatus 100 of the second embodiment is designed to generate a prediction model that predicts choice behavior of people among a plurality of options. The information processing apparatus 100 also predicts choice behavior using the generated prediction model. Note that the generated prediction model may be used by another information processing apparatus. The information processing apparatus 100 may be a client apparatus or a server apparatus. The information processing apparatus 100 may be called a computer, a model generation apparatus, a machine learning apparatus, a behavior prediction apparatus, or a simulation apparatus. The information processing apparatus 100 corresponds to the information processing apparatus 10 of the first embodiment.

The prediction model of the second embodiment provides a virtual environment that accurately reproduces the real world on the basis of Internet of Things (IoT) data collected from sensor devices. Such a virtual environment is sometimes called social digital twin. This virtual environment allows for simulation of changes in the real world that would occur if modifications are made to social infrastructure design. Such simulation is sometimes called digital rehearsal.

In the second embodiment, human behavior simulation is assumed as an example, which predicts changes in people's travel patterns if the fares of transportation modes are changed. For example, shared mobility services enable users to rent vehicles at hubs near their departure points and return them at hubs near their destinations, instead of using their own vehicles.

In these services, there is a possibility that returned vehicles may concentrate at certain hubs, due to non-uniform population density. To address the imbalance in the number of vehicles, it is conceivable to set different fees depending on return location hubs. The prediction model that is generated in the second embodiment is applicable to simulate changes in the return location hubs that would occur if the fees are changed.

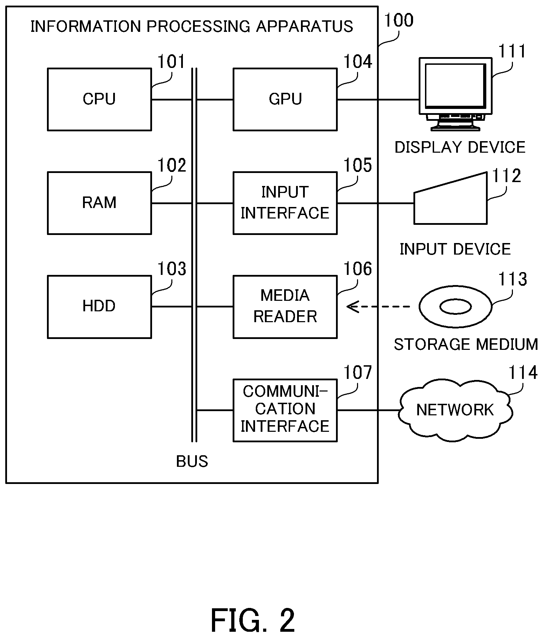

FIG. 2 illustrates an example of the hardware configuration of the information processing apparatus according to the second embodiment.

The information processing apparatus 100 includes a CPU 101, a RAM 102, an HDD 103, a GPU 104, an input interface 105, a media reader 106, and a communication interface 107, which are connected to a bus. The CPU 101 corresponds to the processing unit 12 of the first embodiment. The RAM 102 or HDD 103 corresponds to the storage unit 11 of the first embodiment.

The CPU 101 is a processor that executes program commands. The CPU 101 loads programs and data from the HDD 103 to the RAM 102 and runs the programs. The information processing apparatus 100 may be provided with a plurality of processors.

The RAM 102 is a volatile semiconductor memory that temporarily stores programs that are run by the CPU 101, and data that is used by the CPU 101 in processing. The information processing apparatus 100 may be provided with a different type of volatile memory than RAM.

The HDD 103 is a non-volatile storage device that stores software programs such as operating system (OS), middleware, and application software, and data. The information processing apparatus 100 may be provided with another type of non-volatile storage device such as a flash memory or a solid state drive (SSD).

The GPU 104 performs image processing in collaboration with the CPU 101 and outputs images to a display device 111 connected to the information processing apparatus 100. Examples of the display device 111 include a cathode ray tube (CRT) display, a liquid crystal display, an organic electro-luminescence (EL) display, and a projector. Another type of output device such as a printer may be connected to the information processing apparatus 100.

The GPU 104 may be used as a general-purpose computing on graphics processing unit (GPGPU). The GPU 104 is able to run programs in accordance with commands from the CPU 101. The information processing apparatus 100 may be provided with a volatile semiconductor memory other than the RAM 102 as a GPU memory.

The input interface 105 receives an input signal from an input device 112 connected to the information processing apparatus 100. Examples of the input device 112 include a mouse, a touch panel, and a keyboard. A plurality of input devices may be connected to the information processing apparatus 100.

The media reader 106 is a reading device that reads programs and data from a storage medium 113. Examples of the storage medium 113 include a magnetic disk, an optical disc, and a semiconductor memory. Magnetic disks include flexible disks (FDs) and HDDs. Optical discs include compact discs (CDs) and digital versatile discs (DVDs). The media reader 106 copies the programs and data from the storage medium 113 to another storage medium such as the RAM 102 or the HDD 103. The read programs may be run by the CPU 101.

The storage medium 113 may be a portable storage medium. The storage medium 113 may be used to distribute the programs and data. The storage medium 113 and HDD 103 may be referred to as computer-readable storage media.

The communication interface 107 communicates with other information processing apparatuses over a network 114. The communication interface 107 may be a wired communication interface that is connected to a wired communication device such as a switch or a router, or may be a wireless communication interface that is connected to a wireless communication device such as a base station or an access point.

The following describes the basic structure of a discrete choice model.

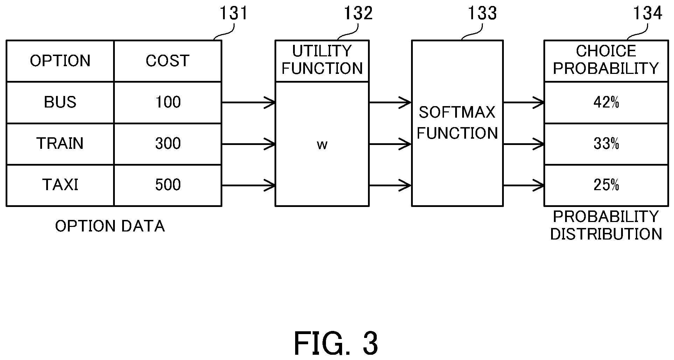

FIG. 3 illustrates an example of a first discrete choice model.

The discrete choice model is a model that predicts choice behavior of each person in choosing one option from a plurality of options. FIG. 3 illustrates an example of a simple discrete choice model. Option data 131 is given to the discrete choice model. The option data 131 includes the respective costs of the plurality of options representing different transportation modes. The cost is a feature value such as fare or travel time, with a higher value indicating more disadvantage for users.

This discrete choice model includes a utility function 132 and a softmax function 133. The utility function 132 includes a variable representing an option attribute. The option attribute is a characteristic of the options, and here corresponds to the cost of each option included in the option data 131. The utility function 132 may further include variables representing personal attributes and environmental attributes. The personal attributes are characteristics of prediction-target people such as age and gender. The environmental attributes are characteristics of the environment at the time of decision-making, such as a temperature. However, to simplify the description in the second embodiment, the utility function 132 and utility functions to be described later include a variable representing an option attribute and do not include any variables representing personal attributes or environmental attributes.

The utility function 132 calculates utility from a value of the variable. The utility is an evaluation value representing the satisfaction level of a prediction-target person with an option, with a higher value indicating a higher satisfaction level. The utility function 132 is, for example, a polynomial that includes a parameter w acting on the variable representing the option attribute. In the second embodiment, there are three options: bus, train, and taxi. The utility function 132 calculates the utility of the bus from the cost of the bus. Similarly, the utility function 132 calculates the utility of the train from the cost of the train and the utility of the taxi from the cost of the taxi.

The softmax function 133 calculates a probability distribution 134 from the utilities of the plurality of options. The probability distribution 134 includes the respective choice probabilities of the plurality of options. The choice probability of each option is a numerical value in the range of 0 to 1 (0% to 100%), inclusive, and the total choice probability of the plurality of options is 1 (100%). The softmax function 133 may be said to relatively evaluate the utilities of the plurality of options. As an example, the probability distribution 134 indicates that the bus has a choice probability of 42%, the train has a choice probability of 33%, and the taxi has a choice probability of 25%.

Note that the discrete choice model may use a relative evaluation function other than the softmax function 133 to calculate the probability distribution 134 from the utilities of the plurality of options. The discrete choice model calculates the probability distribution 134 for each person. In the case of a group of people, the choice behavior of the group is represented by an average probability distribution, which is, for example, the average of the probability distributions 134 of the people in the group.

The value of the parameter w included in the utility function 132 is determined through machine learning using behavior history data collected from the real world. The behavior history data includes choice results indicating options actually chosen by a plurality of people. In the case where the utility function 132 further includes variables representing personal attributes and environmental attributes, the behavior history data further includes the values of the personal attributes and environmental attributes as well. For example, behavior history data related to transportation modes is extracted from a usage history of electronic money.

The machine learning determines the value of the parameter w on the basis of the behavior history data so as to maximize the log-likelihood. A log-likelihood function calculates the logarithm of the choice probability corresponding to an

EP 4 546 242 A1

actually chosen option for each choice behavior, and calculates the sum of the logarithms as the log-likelihood. The machine learning may determine the value of the parameter w by an iterative method such as gradient descent.

For example, the machine learning first sets an initial value for the parameter w. The machine learning inputs the option data 131 into the utility function 132 to calculate the probability distribution 134 using the current value of the parameter w. The machine learning compares the probability distribution 134 with the behavior history data to calculate the log-likelihood, and updates the value of the parameter w so as to increase the log-likelihood. The machine learning iteratively updates the value of the parameter w until a stop condition is reached. The stop condition may be that the number of updates of the value of the parameter w exceeds a threshold. Alternatively, the stop condition may be that the update amount of the value of the parameter w is below a threshold, i.e., the value of the parameter w has converged.

The above-described simple discrete choice model assumes that the utility of an option changes linearly with its cost. However, strictly speaking, this assumption is sometimes not true due to human cognitive biases. Each person has a subjective reference cost, which serves as a benchmark for evaluating each option. This reference cost is sometimes called a reference point.

According to the prospect theory in behavioral economics, the change in utility relative to cost is asymmetric between options whose costs are advantageous relative to the reference point and options whose costs are disadvantageous relative to the reference point. In general, disadvantageous conditions relative to the reference point have greater changes in utility than advantageous conditions relative to the reference point. This reflects a human tendency that people overvalue losses relative to a reference point. Therefore, it is expected that incorporating such cognitive biases into the discrete choice model will improve the prediction accuracy.

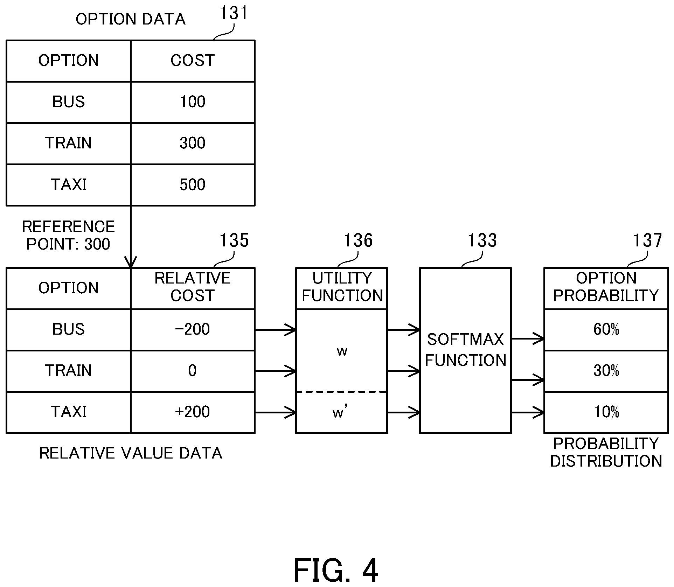

FIG. 4 illustrates an example of a second discrete choice model.

In calculating a probability distribution 137 for a certain person, this discrete choice model converts the option data 131 into relative value data 135 using the reference point of the person. Here, it is assumed that the cost corresponding to the reference point is 300. This reference point is a cost that the person considers the most "standard" when using a transportation mode.

The relative value data 135 includes the respective relative costs of the plurality of options. A relative cost is a cost relative to the reference point and is calculated, for example, by subtracting the reference point from the original cost. For example, the relative cost of the bus is calculated as 100 - 300 = -200, the relative cost of the train is calculated as 300 - 300 = 0, and the relative cost of the taxi is calculated as 500 - 300 = +200.

This discrete choice model includes a utility function 136 and a softmax function 133. The utility function 136 may be referred to as a value function. As with the above-described utility function 132, the utility function 136 includes a variable representing an option attribute. This option attribute corresponds to the relative cost of each option included in the relative value data 135.

The utility function 136 calculates the respective utilities of the plurality of options. In order to represent the psychology that a change in utility relative to cost is large near the reference point and becomes smaller as the cost deviates further from the reference point, the utility function 136 is, for example, a nonlinear function.

Here, the utility function 136 includes parameters w and w' that act on the variable representing the option attribute. The parameter w is applied to options with relative costs less than or equal to 0. The parameter w' is applied to options with relative costs greater than 0. Generally, these parameters w and w' have different values. For example, the value of the parameter w' is greater than that of the parameter w. This means that the utility function 136 is asymmetric about the reference point.

The softmax function 133 calculates the probability distribution 137 from the utilities of the plurality of options. As an example, the probability distribution 137 indicates that the bus has a choice probability of 60%, the train has a choice probability of 30%, and the taxi has a choice probability of 10%. Compared with the probability distribution 134, the probability distribution 137 indicates that the bus has a high choice probability and the taxi has a low choice probability. That is, the probability distribution 137 reflects loss aversion, where people dislike options that are disadvantageous relative to the reference point. Generally, the probability distribution 137 has higher accuracy in predicting choice behavior of the person than the probability distribution 134.

However, an exact reference point is different for each person and is a person's inner latent variable that is difficult to observe directly from outside. Therefore, it is not easy to generate a discrete choice model that includes such exact reference points as an explanatory variable. On the other hand, if the reference points of all people are approximated to the same fixed value, it would not be possible to achieve sufficient prediction accuracy. To address this, the information processing apparatus 100 generates a prediction model that takes reference points into account, in the following manner.

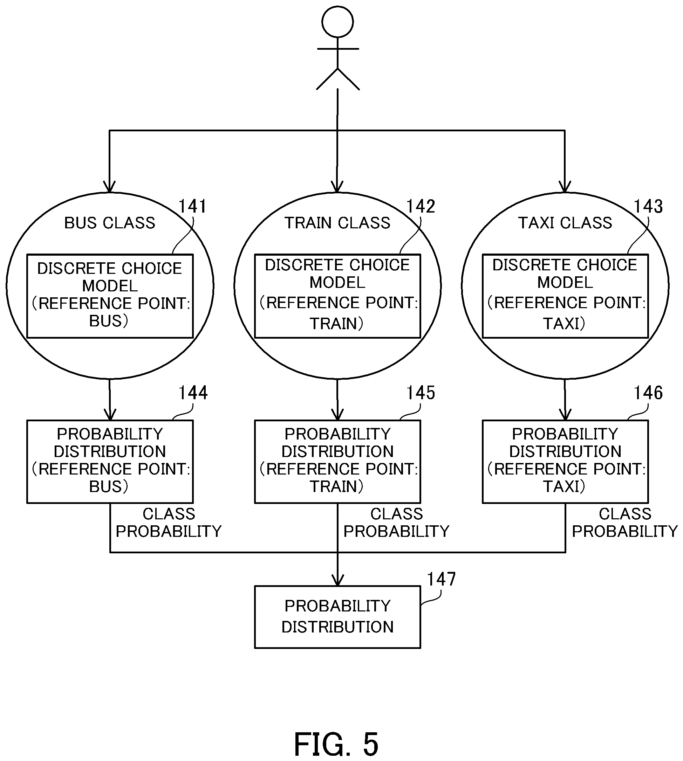

FIG. 5 illustrates an example of calculating choice probabilities using a plurality of classes with different reference points.

The information processing apparatus 100 adopts the following assumptions regarding reference points: each person considers one of a plurality of options as the standard option and has a reference point close to the cost of the standard option. Therefore, for the probability calculation, the information processing apparatus 100 approximates each reference point to the cost of one of the options. In addition, people with similar values of a personal attribute are likely to take similar choice behaviors.

In view of the above, the information processing apparatus 100 defines a plurality of classes corresponding to a plurality of options. A certain class corresponds to a group of people who consider the corresponding option as their standard option, and may be interpreted as a group of people who choose the option most frequently. The information processing apparatus 100 approximates the reference points of the people belonging to that class to the cost of that option.

In the second embodiment, the information processing apparatus 100 defines a bus class, a train class, and a taxi class. For the probability calculation, people belonging to the bus class have the cost of the bus as their reference point. People belonging to the train class have the cost of the train as their reference point. People belonging to the taxi class have the cost of the taxi as their reference point.

The information processing apparatus 100 classifies people into the classes according to their values of personal attributes such as age and gender. However, people with the same values of the personal attributes do not always consider the same option as standard. Therefore, instead of exclusively classifying each person to one class, the information processing apparatus 100 calculates a class probability for each of the plurality of classes. The class probability of a person for a class represents the probability that the person belongs to the class.

The information processing apparatus 100 generates a discrete choice model for each of the plurality of classes. The discrete choice model for a certain class calculates a probability distribution on the basis of the relative value data obtained through conversion using the reference point of the class. This discrete choice model is based on the prospect theory and has two types of parameters that switch depending on the sign of a relative cost. Generally, the parameters included in the discrete choice models for different classes have different values.

The discrete choice model 141 is generated for the bus class to calculate a probability distribution 144 with the cost of the bus as the reference point. The discrete choice model 142 is generated for the train class to calculate a probability distribution 145 with the cost of the train as the reference point. The discrete choice model 143 is generated for the taxi class to calculate a probability distribution 146 with the cost of the taxi as the reference point.

The information processing apparatus 100 combines the probability distributions of the plurality of classes according to the class probabilities to thereby calculate a probability distribution 147 for the person. The class probabilities are used as weights for the plurality of classes. The probability distribution 147 is the weighted average of the probability distributions of the plurality of classes. Here, the information processing apparatus 100 combines the probability distribution 144 of the bus class, the probability distribution 145 of the train class, and the probability distribution 146 of the taxi class to calculate the probability distribution 147.

The bus choice probability included in the probability distribution 147 is the weighted average of the bus choice probabilities included in the probability distributions 144, 145, and 146, weighted by the class probability for the bus class. Similarly, the train choice probability included in the probability distribution 147 is the weighted average of the train choice probabilities included in the probability distributions 144, 145, and 146, weighted by the class probability for the train class. The taxi choice probability included in the probability distribution 147 is the weighted average of the taxi choice probabilities included in the probability distributions 144, 145, and 146, weighted by the class probability for the taxi class.

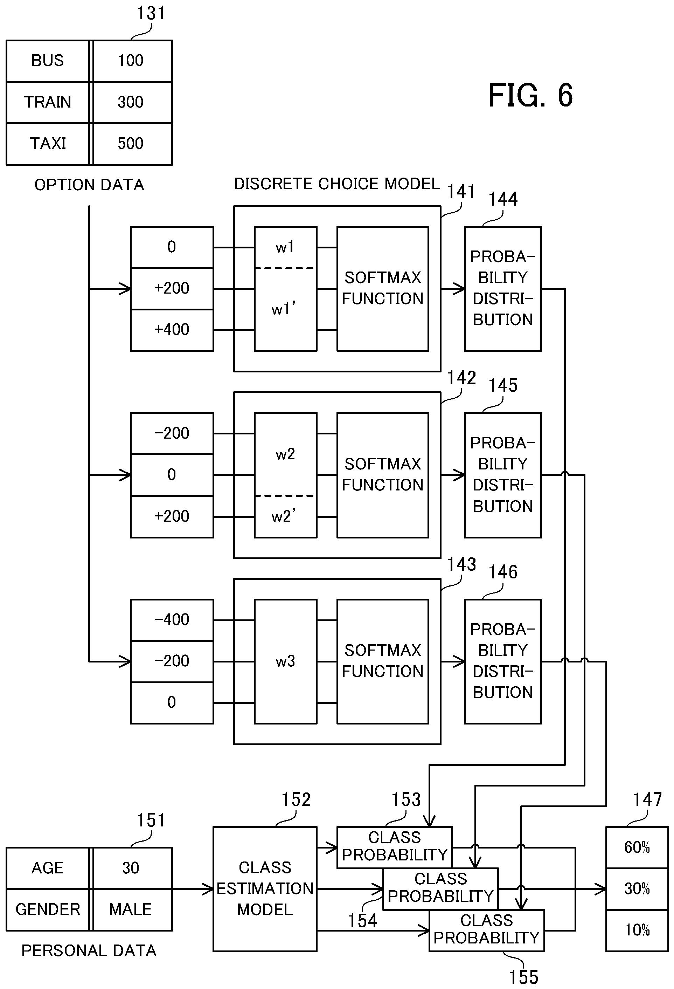

FIG. 6 illustrates an example of a prediction model that includes discrete choice models for a plurality of classes.

The information processing apparatus 100 converts the option data 131 into relative value data for each class. More specifically, for the bus class, the information processing apparatus 100 relativizes the cost of each option with the cost of the bus as the reference point. Similarly, for the train class, the information processing apparatus 100 relativizes the cost of each option with the cost of the train as the reference point. For the taxi class, the information processing apparatus 100 relativizes the cost of each option with the cost of the taxi as the reference point.

The information processing apparatus 100 calculates the probability distribution 144 on the basis of the relative value data generated for the bus class using the discrete choice model 141. The discrete choice model 141 includes a utility function and a softmax function. The utility function of the discrete choice model 141 includes parameters $w1$ and $w1'$. The parameter $w1$ is used for calculating the utility of the bus. The parameter $w1'$ is used for calculating the utilities of the train and taxi.

Similarly, the information processing apparatus 100 calculates the probability distribution 145 on the basis of the relative value data generated for the train class using the discrete choice model 142. The discrete choice model 142 includes a utility function and a softmax function. The utility function of the discrete choice model 142 includes parameters $w2$ and $w2'$. The parameter $w2$ is used for calculating the utilities of the bus and train. The parameter $w2'$ is used for calculating the utility of the taxi.

The information processing apparatus 100 calculates the probability distribution 146 on the basis of the relative value data generated for the taxi class using the discrete choice model 143. The discrete choice model 143 includes a utility function and a softmax function. The utility function of the discrete choice model 143 includes a parameter $w3$. The parameter $w3$ is used for calculating the utilities of the bus, train, and taxi.

In addition, the information processing apparatus 100 inputs personal data 151 into a class estimation model 152 to calculate class probabilities 153, 154, and 155. The personal data 151 includes age and gender. As described later, in the second embodiment, the information processing apparatus 100 implements the class estimation model 152 in the form of a neural network. However, the class estimation model 152 may be a different type of model than the neural network.

Each class probability 153, 154, and 155 is a numerical value in the range of 0 to 1, inclusive. The sum of the class probabilities 153, 154, and 155 is 1. The class probability 153 represents a probability of belonging to the bus class. The class probability 154 represents a probability of belonging to the train class. The class probability 155 represents a probability of belonging to the taxi class.

The information processing apparatus 100 calculates the probability distribution 147 by weighting and combining the probability distributions 144, 145, and 146 using the class probabilities 153, 154, and 155. The probability distribution 147 is the sum of the product of the probability distribution 144 and class probability 153, the product of the probability distribution 145 and class probability 154, and the product of the probability distribution 146 and class probability 155.

More specifically, the probability distribution 144 corresponds to conditional probabilities on the assumption that the reference point of the person with the personal data 151 is the cost of the bus. The probability distribution 145 corresponds to conditional probabilities on the assumption that the reference point of the person is the cost of the train. The probability distribution 146 corresponds to conditional probabilities on the assumption that the reference point of the person is the cost of the taxi. The product of the probability distribution 144 and class probability 153 corresponds to modified probabilities of the bus class. The product of the probability distribution 145 and class probability 154 corresponds to modified probabilities of the train class. The product of the probability distribution 146 and class probability 155 corresponds to modified probabilities of the taxi class.

The prediction model includes the discrete choice models 141, 142, 143 and class estimation model 152. In the machine learning, the information processing apparatus 100 collectively trains the parameters w1, w1', w2, w2', and w3 included in the discrete choice models 141, 142, 143 and the parameters included in the class estimation model 152 together, using collected behavior history data.

For example, the information processing apparatus 100 initializes the parameters w1, w1', w2, w2', and w3, and the parameters of the class estimation model 152. The information processing apparatus 100 calculates the probability distributions 144, 145, and 146 using the option data 131 indicating the past costs of the options. For each choice behavior recorded in the behavior history data, the information processing apparatus 100 inputs the corresponding personal data 151 into the class estimation model 152 to calculate the probability distribution 147. Then, for each choice behavior, the information processing apparatus 100 calculates the log-likelihood by comparing the probability distribution 147 with the actual choice result.

The information processing apparatus 100 updates the values of the parameters w1, w1', w2, w2', and w3 and the parameters of the class estimation model 152 so as to increase the log-likelihood. The information processing apparatus 100 iteratively updates the values of these parameters until a stop condition is reached.

The information processing apparatus 100 may predict choice behavior of a new person, who is not recorded in the behavior history data, under the current costs using the trained prediction model. In this case, the information processing apparatus 100 inputs the personal data 151 of the new person into the class estimation model 152, without changing the option data 131, to thereby calculate the probability distribution 147.

In addition, the information processing apparatus 100 may predict choice behavior with the costs of the options changed, using the trained prediction model. In this case, the information processing apparatus 100 changes the costs included in the option data 131, and generates relative value data for each of the plurality of classes on the basis of the changed option data 131.

At this time, the reference point in a certain class is the changed cost of the standard option of the class. For example, if the cost of the bus is changed from 100 to 200, the information processing apparatus 100 relativizes the cost of each option with respect to the reference point of 200 in the bus class. In this connection, the information processing apparatus 100 may use the pre-change cost as the reference point. For example, even if the cost of the bus is changed from 100 to 200, the information processing apparatus 100 may be able to relativize the cost of each option with respect to the reference point of 100 in the bus class.

The information processing apparatus 100 applies the trained discrete choice models 141, 142, and 143 to the updated relative value data to calculate the probability distributions 144, 145, and 146. The information processing apparatus 100 also inputs the personal data 151 of a known person recorded in the behavior history data or a new person into the class estimation model 152 to calculate the probability distribution 147 after the cost change.

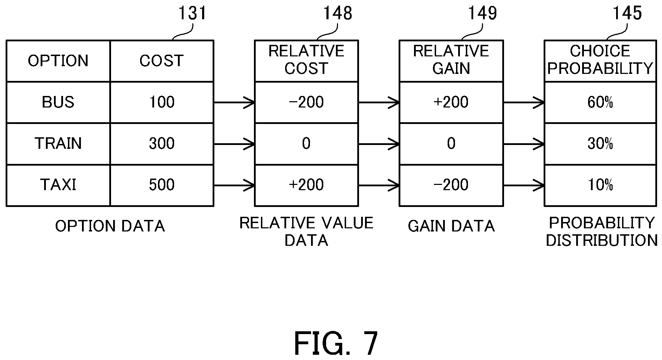

FIG. 7 illustrates an example of input and output data of a discrete choice model.

As an example, the information processing apparatus 100 uses the utility function of Equation (1). In Equation (1), V denotes utility, and $\Delta x$ denotes a relative gain with respect to a reference point. The relative gain is an index value, with a higher value indicating more advantage. For example, the relative gain is the numerical value obtained by reversing the sign of the relative cost. In addition, w, w', $\alpha$, $\beta$, and $\lambda$ are parameters whose values are determined through machine learning.

This utility function calculates the utility V using a formula that depends on whether the relative gain $\Delta x$ is non-negative or negative. The parameters w and $\alpha$ are used when the relative gain $\Delta x$ is non-negative. The parameters w', $\beta$, and $\lambda$ are used when the relative gain $\Delta x$ is negative.

$$V = \begin{cases} (w \cdot \Delta x)^{\alpha} & \text{if } \Delta x \geq 0 \\ -\lambda \cdot (-w' \Delta x)^{\beta} & \text{if } \Delta x < 0 \end{cases} \quad (1)$$

In addition, the information processing apparatus 100 uses the softmax function of Equation (2). In Equation (2), $p_k$ denotes the choice probability of an option k, and $V_k$ denotes the utility of the option k. In addition, exp denotes an exponential function using Euler's number e, and $\Sigma i$ denotes the sum of the values for all options.

$$p_k = \frac{\exp(V_k)}{\sum_i \exp(V_i)} \quad (2)$$

The following describes an example of calculating the probability distribution 145 of the train class using the discrete choice model 142. The information processing apparatus 100 converts the option data 131 into relative value data 148. The relative value data 148 includes the respective relative costs of the plurality of options. A relative cost here is obtained by subtracting the train cost of 300 from the original cost. The relative cost of the bus is -200, the relative cost of the train is 0, and the relative cost of the taxi is +200.

The information processing apparatus 100 converts the relative value data 148 into gain data 149. The gain data 149 includes the respective relative gains of the plurality of options. A relative gain here is obtained by reversing the sign of the relative cost. The relative gain of the bus is +200, the relative gain of the train is 0, and the relative gain of the taxi is -200.

The discrete choice model 142 calculates the utility of the bus by substituting the relative gain of the bus for $\Delta x$ in Equation (1). Similarly, the discrete choice model 142 calculates the utility of the train by substituting the relative gain of the train for $\Delta x$, and calculates the utility of the taxi by substituting the relative gain of the taxi for $\Delta x$. The discrete choice model 142 then calculates the respective choice probabilities of the bus, train, and taxi by substituting the utilities of the bus, train, and taxi for $V_i$ (i = 1, 2, 3) in Equation (2). The probability distribution 145 includes these three choice probabilities.

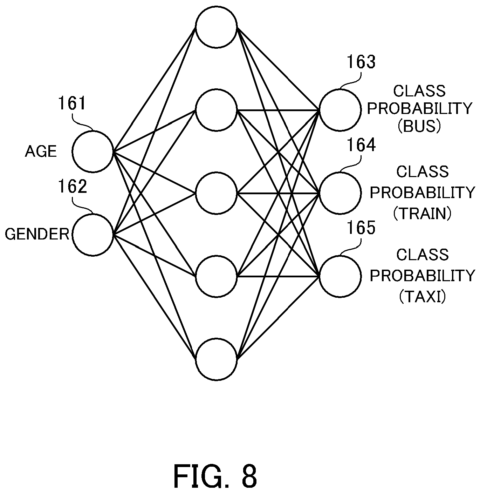

FIG. 8 illustrates an example of a class estimation model.

As an example, the class estimation model 152 is a neural network that includes an input layer, one hidden layer, and an output layer. The input layer is two-dimensional, the hidden layer is five-dimensional, and the output layer is three-dimensional. In this connection, the dimensionality of the input layer depends on the number of personal attributes, and the dimensionality of the output layer depends on the number of classes. The dimensionality of the hidden layer may be adjusted according to the dimensionalities of the input and output layers.

The input layer includes nodes 161 and 162. The node 161 represents age, and the node 162 represents gender. A non-negative integer representing age is input into the node 161. The numerical value obtained by converting gender is input into the node 162. For example, male is converted to 1 and female is converted to 0.

The output layer includes nodes 163, 164, and 165. The node 163 represents the class probability 153 for the bus, the node 164 represents the class probability 154 for the train, and the node 165 represents the class probability 155 for the taxi. The output layer uses the softmax function as its activation function. As a result, the values calculated at the nodes 163, 164, and 165 represent probabilities. The neural network includes parameters representing the weights of the edges between the nodes. The information processing apparatus 100 determines the values of these parameters through machine learning.

The following describes the functions and processing procedures of the information processing apparatus 100.

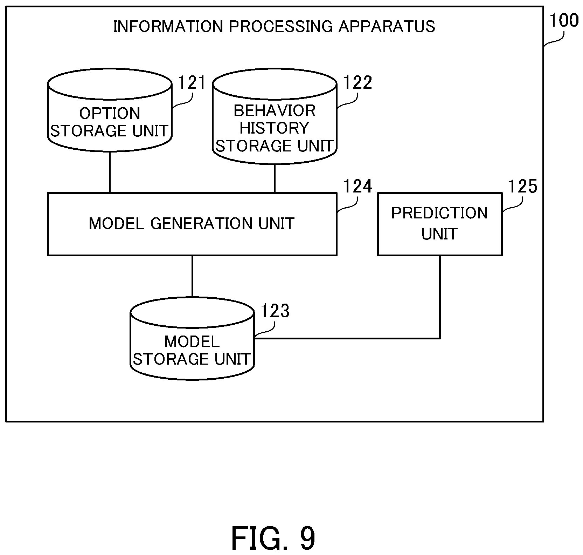

FIG. 9 is a block diagram illustrating an example of the functions of the information processing apparatus.

The information processing apparatus 100 includes an option storage unit 121, a behavior history storage unit 122, a model storage unit 123, a model generation unit 124, and a prediction unit 125. The option storage unit 121, behavior history storage unit 122, and model storage unit 123 are implemented by using, for example, the RAM 102 or HDD 103. The model generation unit 124 and prediction unit 125 are implemented by using, for example, the CPU 101 or GPU 104, and programs.

The option storage unit 121 stores the option data 131. The option data 131 is generated by, for example, a user. The information processing apparatus 100 may receive the option data 131 input by the user or may receive it from another information processing apparatus.

The behavior history storage unit 122 stores behavior history data. The behavior history data indicates a plurality of choice behaviors performed by a plurality of people. The behavior history data associates the values of personal attributes with choice results. The model storage unit 123 stores a trained prediction model. The prediction model includes discrete choice models, respectively, for a plurality of classes and the class estimation model 152.

The model generation unit 124 trains the prediction model through machine learning using the option data 131 stored in the option storage unit 121 and the behavior history data stored in the behavior history storage unit 122. The model generation unit 124 saves the trained prediction model in the model storage unit 123. The model generation unit 124 may display the trained prediction model on the display device 111 or send it to another information processing device.

The prediction unit 125 reads the trained prediction model from the model storage unit 123. The prediction unit 125 also receives option data and personal data including the values of personal attributes for one or more people. This option data may be the same as the option data 131 used by the model generation unit 124 or may be new option data with revised costs. In addition, the personal data may be data of known people recorded in the behavior history data used by the model generation unit 124 or data of new people who are not recorded in the behavior history data.

The prediction unit 125 inputs the option data and the values of the personal attributes of each person included in the personal data into the prediction model to calculate a probability distribution that predicts the choice behavior of the person. In the case of predicting the choice behavior of a group, the prediction unit 125 averages the probability distributions of the people in the group to calculate an overall probability distribution. The prediction unit 125 outputs the prediction result. The prediction unit 125 may save the prediction result in a non-volatile storage, display it on the display device 111, or send it to another information processing apparatus.

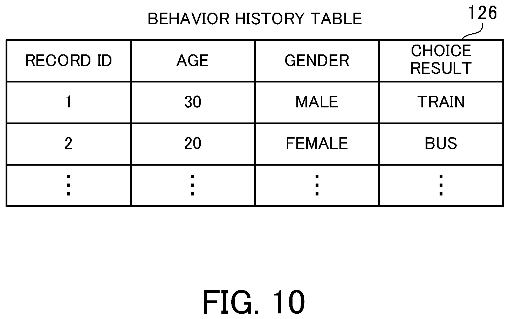

FIG. 10 illustrates an example of a behavior history table.

The behavior history table 126 is stored in the behavior history storage unit 122. The behavior history table 126 contains a plurality of records, each with a record ID, age, gender, and choice result. One record corresponds to one choice behavior. The behavior history table 126 contains records for different people together. The behavior history table 126 may also contain two or more records for the same person at different decision-making times.

The record ID identifies a record. The age and gender are examples of personal attributes. The behavior history table 126 may include other personal attributes than age and gender. The choice result indicates the option chosen by the corresponding person from among a plurality of options. For example, the choice result in each record is one of bus, train, and taxi.

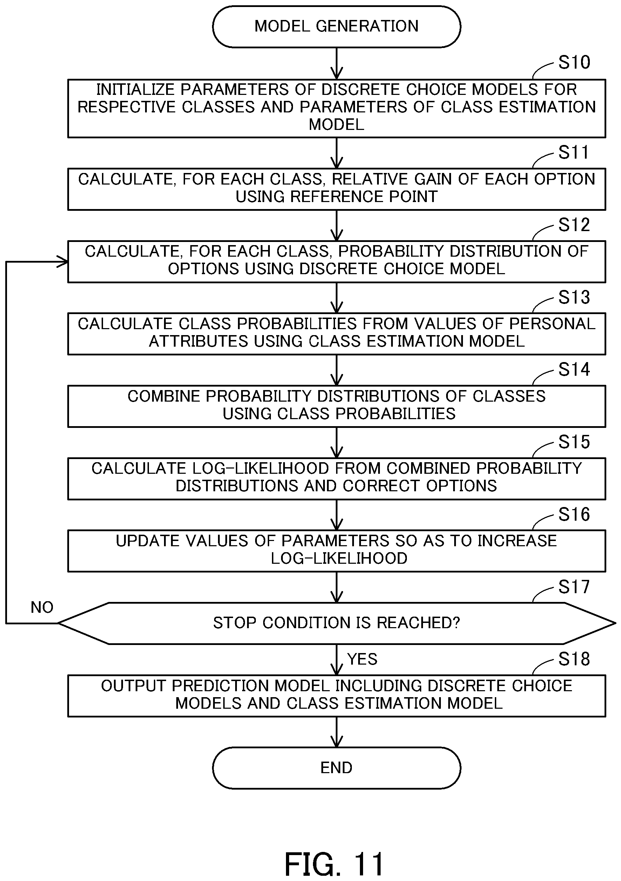

FIG. 11 is a flowchart illustrating an example of a procedure for model generation.

(S10) The model generation unit 124 defines a plurality of classes corresponding to a plurality of options indicated by option data 131. The model generation unit 124 initializes the parameters included in the discrete choice models for the respective classes. In addition, the model generation unit 124 initializes the parameters included in the class estimation model 152.

(S11) For each of the plurality of classes, the model generation unit 124 identifies the cost of the corresponding option as a reference point. The model generation unit 124 converts the cost of each of the plurality of options into a relative cost using the reference point. The model generation unit 124 then converts the relative cost of each of the plurality of options into a relative gain, with a higher value indicating more advantage.

(S12) For each of the plurality of classes, the model generation unit 124 calculates a probability distribution indicating the choice probabilities of the plurality of options using the corresponding discrete choice model. In the discrete choice model, the model generation unit 124 inputs the relative gain of each option into the utility function to calculate their utilities, and then inputs the utilities of the plurality of options into the softmax function to calculate the probability distribution.

(S13) For each record contained in the behavior history table 126, the model generation unit 124 inputs the values of the personal attributes into the class estimation model 152 to calculate class probabilities.

(S14) For each record contained in the behavior history table 126, the model generation unit 124 combines the probability distributions of the plurality of classes calculated in step S12, using the class probabilities calculated in step S13 as weights.

(S15) For each record contained in the behavior history table 126, the model generation unit 124 extracts the choice probability of the correct option from the probability distribution obtained in step S14. The model generation unit 124 then calculates the log-likelihood by summing the logarithms of the extracted choice probabilities for all records contained in the behavior history table 126.

(S16) The model generation unit 124 updates the values of the parameters included in the discrete choice model of each class and the values of the parameters included in the class estimation model 152 so as to increase the log-likelihood. For example, the model generation unit 124 calculates the gradient of the log-likelihood by slightly changing the value of each parameter, and updates the values of the parameters on the basis of the gradient.

(S17) The model generation unit 124 determines whether a stop condition is reached. For example, the model generation unit 124 determines whether the number of iterations of steps S12 to S16 exceeds a threshold. Alternatively, the model generation unit 124 may determine whether the update amounts of the values of all parameters are below a threshold, i.e., whether the values of the parameters have converged. If the stop condition is reached, the process proceeds to step S18. If the stop condition is not reached, the process proceeds back to step S12.

(S18) The model generation unit 124 outputs the prediction model that includes the discrete choice models for the respective classes and the class estimation model 152.

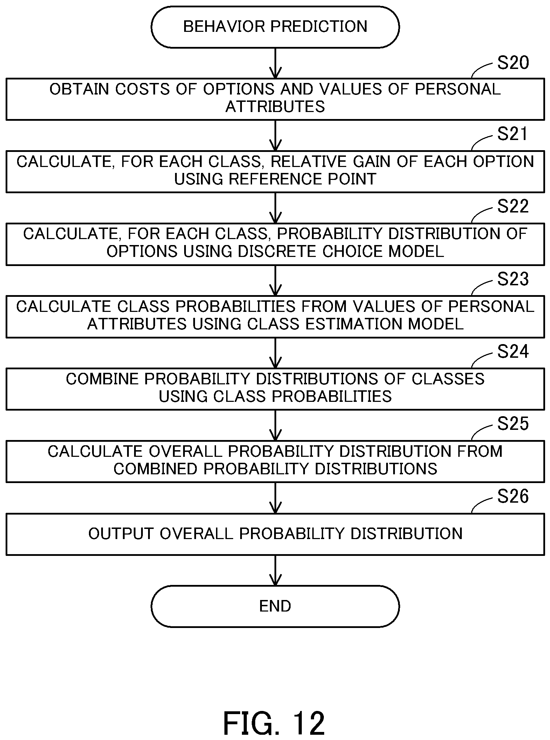

FIG. 12 is a flowchart illustrating an example of a procedure for behavior prediction.

(S20) The prediction unit 125 obtains option data indicating the costs of a plurality of options and personal data indicating the values of personal attributes for one or more people.

(S21) For each of the plurality of classes, the prediction unit 125 identifies the cost of the corresponding option as a reference point. In this connection, the prediction unit 125 may use the same reference point as used during the model generation. The prediction unit 125 converts the cost of each of the plurality of options into a relative cost using the reference point. The prediction unit 125 then converts the relative cost of each of the plurality of options into a relative gain, with a higher value indicating more advantage.

(S22) For each of the plurality of classes, the prediction unit 125 calculates a probability distribution indicating the choice probabilities of the plurality of options using the corresponding discrete choice model. In the discrete choice model, the prediction unit 125 inputs the relative gain of each option into the utility function to calculate their utilities, and then inputs the utilities of the plurality of options into the softmax function to calculate the probability distribution.

(S23) For each of the one or more people, the prediction unit 125 inputs the values of the personal attributes into the class estimation model 152 to calculate class probabilities.

(S24) For each of the one or more people, the prediction unit 125 combines the probability distributions of the plurality of classes calculated in step S22, using the class probabilities calculated in step S23 as weights.

(S25) The prediction unit 125 averages the probability distributions of the one or more people obtained in step S24 to calculate an overall probability distribution.

(S26) The prediction unit 125 outputs the calculated overall probability distribution. In this connection, the prediction unit 125 may output the probability distribution of each person.

As described above, the information processing apparatus 100 of the second embodiment generates a prediction model that predicts choice behavior of people using behavior history data collected from the real world. This enables the information processing apparatus 100 to simulate measures such as changing the costs of options in a virtual environment using the generated prediction model.

Furthermore, the information processing apparatus 100 generates the prediction model that takes into account differences in reference points that are difficult to directly observe. This improves prediction accuracy, as compared with prediction models that do not take reference points into account and prediction models that approximate the reference points of all people to the same fixed value.

In addition, the information processing apparatus 100 defines classes that each have a cost corresponding to any of a plurality of options as the reference point, and generates a discrete choice model for each class. Furthermore, the information processing apparatus 100 generates a class estimation model 152 that calculates the probabilities of belonging to each class from the values of personal attributes. The prediction model calculates a final prediction result by combining the prediction results obtained for the respective classes using the probabilities of belonging to each class as weights. This enables the information processing apparatus 100 to implement the prediction model that takes differences in reference points into account, which results in improving prediction accuracy.

In addition, the information processing apparatus 100 collectively trains the discrete choice models for the respective classes and the class estimation model 152 together using the behavior history data. Therefore, the discrete choice models and the class estimation model 152 are trained so as to ensure that the final prediction results closely approximate the actual choice results. Furthermore, the information processing apparatus 100 adjusts the values of the parameters included in the discrete choice models for the classes while distinguishing the parameters for one class from those for another. This enables the prediction model to appropriately reflect the differences in reference points in the prediction results.

In one aspect, the accuracy of a model that predicts choice behavior of people is improved.

**Claims**

1. A computer program that causes a computer to perform a process comprising:

    obtaining first feature data (13) and history data (14), the first feature data indicating a plurality of first feature values corresponding to a plurality of options, the history data associating a value of an attribute of a person with a choice result of the person in choosing from the plurality of options;
    generating, for each of a plurality of classes (15a, 15b) with different standard options specified from the plurality of options, second feature data (16a, 16b) indicating a plurality of second feature values obtained by converting the plurality of first feature values using a first feature value corresponding to a standard option of the each of the plurality of classes; and
    generating a prediction model (17) including a plurality of first models (18a, 18b) corresponding to the plurality of classes and a second model (19), using the history data and the second feature data generated for the each of the plurality of classes, the plurality of first models each being configured to calculate a prediction result of predicting choice behavior among the plurality of options, the second model being configured to calculate a classification result of classification into the plurality of classes based on a value of the attribute.

2. The computer program according to claim 1, wherein

the classification result includes a plurality of class probabilities (153-155) corresponding to the plurality of classes, and

the prediction model combines a plurality of prediction results (144-146) calculated by the plurality of first models (141-143), using the plurality of class probabilities.

3. The computer program according to claim 1, wherein the generating of the prediction model includes determining a value of a first parameter (w) included in each of the plurality of first models (141-143) and a value of a second parameter included in the second model (152), using the history data (126).

4. The computer program according to claim 1, wherein the generating of the prediction model includes updating a value of a parameter (w) included in each of the plurality of first models (141-143), based on the prediction result (144-146) calculated from the second feature data corresponding to the each of the plurality of first models and the choice result.

5. The computer program according to claim 1, wherein the second model is a neural network that calculates a plurality of class probabilities (163-165) corresponding to the plurality of classes from the value (161, 162) of the attribute.

6. A model generation method executed by a computer, the model generation method comprising:

obtaining first feature data (13) and history data (14), the first feature data indicating a plurality of first feature values corresponding to a plurality of options, the history data associating a value of an attribute of a person with a choice result of the person in choosing from the plurality of options;

generating, for each of a plurality of classes (15a, 15b) with different standard options specified from the plurality of options, second feature data (16a, 16b) indicating a plurality of second feature values obtained by converting the plurality of first feature values using a first feature value corresponding to a standard option of the each of the plurality of classes; and

generating a prediction model (17) including a plurality of first models (18a, 18b) corresponding to the plurality of classes and a second model (19), using the history data and the second feature data generated for the each of the plurality of classes, the plurality of first models each being configured to calculate a prediction result of predicting choice behavior among the plurality of options, the second model being configured to calculate a classification result of classification into the plurality of classes based on a value of the attribute.

7. An information processing apparatus comprising:

storage means (11) for storing first feature data (13) and history data (14), the first feature data indicating a plurality of first feature values corresponding to a plurality of options, the history data associating a value of an attribute of a person with a choice result of the person in choosing from the plurality of options; and

processing means (12) for

generating, for each of a plurality of classes (15a, 15b) with different standard options specified from the plurality of options, second feature data (16a, 16b) indicating a plurality of second feature values obtained by converting the plurality of first feature values using a first feature value corresponding to a standard option of the each of the plurality of classes, and

generating a prediction model (17) including a plurality of first models (18a, 18b) corresponding to the plurality of classes and a second model (19), using the history data and the second feature data generated for the each of the plurality of classes, the plurality of first models each being configured to calculate a prediction result of predicting choice behavior among the plurality of options, the second model being configured to calculate a classification result of classification into the plurality of classes based on a value of the attribute.

INFORMATION PROCESSING APPARATUS — 10

STORAGE UNIT — 11

FEATURE DATA — 13

| OPTION | FEATURE VALUE |
|--------|---------------|
| A | 300 |
| B | 500 |
| ⋮ | ⋮ |

HISTORY DATA — 14

| ATTRIBUTE | CHOICE RESULT |
|-----------|---------------|
| 30 YEARS OLD | B |
| 20 YEARS OLD | A |
| ⋮ | ⋮ |

PREDICTION MODEL — 17

16a / 18a / 15a

| A | 0 |
|---|---|
| B | +200 |
| ⋮ | ⋮ |

MODEL (CLASS A)

16b / 18b / 15b

| A | −200 |
|---|---|
| B | 0 |
| ⋮ | ⋮ |

MODEL (CLASS B)

MODEL — 19

PROCESSING UNIT — 12

FIG. 1

INFORMATION PROCESSING APPARATUS 100

CPU 101

GPU 104

DISPLAY DEVICE 111

RAM 102

INPUT INTERFACE 105

INPUT DEVICE 112

HDD 103

MEDIA READER 106

STORAGE MEDIUM 113

COMMUNI-CATION INTERFACE 107

NETWORK 114

BUS

FIG. 2

| OPTION | COST |
|--------|------|
| BUS | 100 |
| TRAIN | 300 |
| TAXI | 500 |

131

OPTION DATA

132

UTILITY FUNCTION

w

133

SOFTMAX FUNCTION

134

| CHOICE PROBABILITY |
|--------|
| 42% |
| 33% |
| 25% |

PROBABILITY DISTRIBUTION

FIG. 3

OPTION DATA 131

| OPTION | COST |
|--------|------|
| BUS | 100 |
| TRAIN | 300 |
| TAXI | 500 |

REFERENCE POINT: 300

135

| OPTION | RELATIVE COST |
|--------|---------------|
| BUS | -200 |
| TRAIN | 0 |
| TAXI | +200 |

RELATIVE VALUE DATA

136

UTILITY FUNCTION

w

w'

133

SOFTMAX FUNCTION

137

| OPTION PROBABILITY |
|--------------------|
| 60% |
| 30% |
| 10% |

PROBABILITY DISTRIBUTION

# FIG. 4

FIG. 5

FIG. 6

131

| BUS | 100 |
| TRAIN | 300 |
| TAXI | 500 |

OPTION DATA

DISCRETE CHOICE MODEL

141  144

| 0 |
| +200 |
| +400 |

w1
- - - -
w1'

SOFTMAX FUNCTION

PROBA-BILITY DISTRI-BUTION

142  145

| −200 |
| 0 |
| +200 |

w2
- - - -
w2'

SOFTMAX FUNCTION

PROBA-BILITY DISTRI-BUTION

143  146

| −400 |
| −200 |
| 0 |

w3

SOFTMAX FUNCTION

PROBA-BILITY DISTRI-BUTION

147

151

| AGE | 30 |
| GENDER | MALE |

PERSONAL DATA

152

CLASS ESTIMATION MODEL

153

CLASS PROBABILITY

154

CLASS PROBABILITY

155

CLASS PROBABILITY

| 60% |
| 30% |
| 10% |

131                148                149                145

| OPTION | COST |
|--------|------|
| BUS | 100 |
| TRAIN | 300 |
| TAXI | 500 |

OPTION DATA

| RELATIVE COST |
|---------------|
| −200 |
| 0 |
| +200 |

RELATIVE VALUE DATA

| RELATIVE GAIN |
|---------------|
| +200 |
| 0 |
| −200 |

GAIN DATA

| CHOICE PROBABILITY |
|--------------------|
| 60% |
| 30% |
| 10% |

PROBABILITY DISTRIBUTION

# FIG. 7

FIG. 8

INFORMATION PROCESSING APPARATUS 100

OPTION STORAGE UNIT 121

BEHAVIOR HISTORY STORAGE UNIT 122

MODEL GENERATION UNIT 124

PREDICTION UNIT 125

MODEL STORAGE UNIT 123

# FIG. 9

BEHAVIOR HISTORY TABLE 126

| RECORD ID | AGE | GENDER | CHOICE RESULT |
|-----------|-----|--------|---------------|
| 1 | 30 | MALE | TRAIN |
| 2 | 20 | FEMALE | BUS |
| ⋮ | ⋮ | ⋮ | ⋮ |

# FIG. 10

MODEL GENERATION

**S10**
INITIALIZE PARAMETERS OF DISCRETE CHOICE MODELS FOR RESPECTIVE CLASSES AND PARAMETERS OF CLASS ESTIMATION MODEL

**S11**
CALCULATE, FOR EACH CLASS, RELATIVE GAIN OF EACH OPTION USING REFERENCE POINT

**S12**
CALCULATE, FOR EACH CLASS, PROBABILITY DISTRIBUTION OF OPTIONS USING DISCRETE CHOICE MODEL

**S13**
CALCULATE CLASS PROBABILITIES FROM VALUES OF PERSONAL ATTRIBUTES USING CLASS ESTIMATION MODEL

**S14**
COMBINE PROBABILITY DISTRIBUTIONS OF CLASSES USING CLASS PROBABILITIES

**S15**
CALCULATE LOG-LIKELIHOOD FROM COMBINED PROBABILITY DISTRIBUTIONS AND CORRECT OPTIONS

**S16**
UPDATE VALUES OF PARAMETERS SO AS TO INCREASE LOG-LIKELIHOOD

**S17**
NO — STOP CONDITION IS REACHED?

YES **S18**
OUTPUT PREDICTION MODEL INCLUDING DISCRETE CHOICE MODELS AND CLASS ESTIMATION MODEL

END

# FIG. 11

BEHAVIOR PREDICTION

S20
OBTAIN COSTS OF OPTIONS AND VALUES OF PERSONAL ATTRIBUTES

S21
CALCULATE, FOR EACH CLASS, RELATIVE GAIN OF EACH OPTION USING REFERENCE POINT

S22
CALCULATE, FOR EACH CLASS, PROBABILITY DISTRIBUTION OF OPTIONS USING DISCRETE CHOICE MODEL

S23
CALCULATE CLASS PROBABILITIES FROM VALUES OF PERSONAL ATTRIBUTES USING CLASS ESTIMATION MODEL

S24
COMBINE PROBABILITY DISTRIBUTIONS OF CLASSES USING CLASS PROBABILITIES

S25
CALCULATE OVERALL PROBABILITY DISTRIBUTION FROM COMBINED PROBABILITY DISTRIBUTIONS

S26
OUTPUT OVERALL PROBABILITY DISTRIBUTION

END

FIG. 12

Europäisches
Patentamt

European
Patent Office

Office européen
des brevets

# EUROPEAN SEARCH REPORT

**Application Number**

EP 24 20 2779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 902 849 A (HUAWEI TECH CO LTD) 18 June 2019 (2019-06-18) * the whole document * ----- | 1-7 | INV. G06Q30/0251 G06Q30/0204 |
| A | US 2020/184360 A1 (MORIMURA TETSURO [JP] ET AL) 11 June 2020 (2020-06-11) * the whole document * ----- | 1-7 | |
| A | US 2006/179014 A1 (YOSHIDA TAKUFUMI [JP] ET AL) 10 August 2006 (2006-08-10) * the whole document * ----- | 1-7 | |

**TECHNICAL FIELDS SEARCHED (IPC)**

G06N
G06Q

The present search report has been drawn up for all claims

| Place of search | Date of completion of the search | Examiner |
|---|---|---|
| The Hague | 18 February 2025 | Sigolo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2779

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | | Publication date | Patent family member(s) | | | Publication date |
|---|---|---|---|---|---|---|
| CN 109902849 | A | 18-06-2019 | CN | 109902849 | A | 18-06-2019 |
| | | | EP | 3690768 | A1 | 05-08-2020 |
| | | | US | 2020242450 | A1 | 30-07-2020 |
| | | | WO | 2019242331 | A1 | 26-12-2019 |
| US 2020184360 | A1 | 11-06-2020 | JP | 6558765 | B2 | 14-08-2019 |
| | | | JP | 2016115316 | A | 23-06-2016 |
| | | | US | 2016180251 | A1 | 23-06-2016 |
| | | | US | 2020184360 | A1 | 11-06-2020 |
| US 2006179014 | A1 | 10-08-2006 | JP | 2006221329 | A | 24-08-2006 |
| | | | US | 2006179014 | A1 | 10-08-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016017086 A
- JP 2017016273 A
- WO 2018198323 A
- JP 2021022243 A
- JP 2022122584 A